# EUROPEAN PATENT SPECIFICATION

(11) **EP 2 204 585 B1**
(45) Date of publication and mention of the grant of the patent: **08.02.2017**
(21) Application number: 09009832.8
(22) Date of filing: 29.07.2009
(51) Int. Cl.: F16B 37/12, F04C 29/00

(54) **Fastening member and rotary compressor**
Befestigungselement und Drehverdichter
Élément de fixation et compresseur rotatif

(30) Priority: 26.12.2008 JP 2008333602
(43) Date of publication of application: 07.07.2010
(73) Proprietor: Mitsubishi Electric Corporation, Chiyoda-ku Tokyo 100-8310 (JP)
(72) Inventor: Kato, Taro, Chiyoda-ku Tokyo 100-8310 (JP)
(74) Representative: Pfenning, Meinig & Partner mbB

(56) References cited:
- EP-A1- 0 021 154
- DE-A1- 3 431 516
- GB-A- 2 002 866
- JP-A- 2000 220 590
- JP-A- 2005 147 093

## Description

### BACKGROUND OF THE INVENTION

### FIELD OF THE INVENTION

The present invention relates to a rotary compressor comprising a fastening member including both functions as a bolt and a nut.

### DISCUSSION OF THE BACKGROUND

Conventionally, in a fastening structure of a compression mechanism part of the rotary compressor, an internal thread is provided at a cylinder and a bolt is screwed. There is a problem that a load caused by the bolt axial force worked on the internal thread deforms the cylinder, and further distortion may occur at an inner circumference.

Accordingly, a method is proposed, in which the cylinder is not provided with the internal thread and fastening the bolt is done using a nut in order to suppress the cylinder distortion caused by the fastening the bolt and to provide a highly efficient rotary compressor having a good sealability (Patent Document 1, for example).

### LIST OF REFERENCES

[Patent Document 1] JP2000-220590.

However, in the method according to the patent document 1, since the cylinder is not provided with the internal thread, it is difficult to carry out center adjusting fastening of the bearing, and a specific small screw, etc. is necessary for center adjusting. Further, such small screw would not function as a fastening force to maintain the structure after the final fastening, thereby causing a problem it becomes an unnecessary component.

Both DE 34 31 516 A1 and GB 2 002 866 A disclose a fastening member comprising a seating face contacting a partner member upon fastening, a neck provided in a standing position from the seating face, an external thread connected to the neck, an internal thread drilled on the same axis with the external thread at an inner circumference of the fastening member, and an inner circumference escape part having a larger diameter than the internal thread and drilled on the same axis with the external thread at at least a part of the neck and/or the external thread.

DE 34 31 516 A1 further shows a head to transmit rotational force of a fastening tool, whereas in GB 2 002 866 A the fastening member has no head but is screwed into the partner member by means of a threaded rod.

In DE 34 31 516 A the seating face also is located next to the head and the external thread has a smaller diameter than the neck.

JP 2005 14 70 93 A describes the assembly of a 2-cylinder hermetic rotary compressor, wherein a first bearing is assembled with a first cylinder by tightening by bolts at a position in a radial direction of the first bearing with a predetermined distance from the tip, a second bearing is directly assembled with a second cylinder by tightening of bolts at a position spaced by a predetermined distance from the tip of the second bearing in a radial direction, and both of the cylinders are directly assembled by tightening by a bolt through an intermediate partition board. The bolt tightening the cylinders is disposed at a position closer to the inside in the radial direction from the tip of each bearing with a predetermined distance.

The present invention is made to solve the above problems, and aims to provide a rotary compressor using a fastening member including both functions of a bolt and a nut.

### SUMMARY OF THE INVENTION

The present invention is defined by a rotary compressor comprising the features of claim 1. A preferred embodiment of this compressor is represented in dependent claim 2.

### BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:
Fig. 1 shows the first embodiment, and is a longitudinal sectional view of a motor 2-cylinder rotary compressor 100;
Fig. 2 shows the first embodiment, and illustrates a fastening member 15 ((a) is a plan view, and (b) is a front view);
Fig. 3 shows the first embodiment, and is a A-A cross sectional view of (a) of Fig. 2;
Fig. 4 shows the first embodiment, and shows an example of the fastening member 15 when used as a bolt ((a) shows status before fastening a first cylinder 8 and a main bearing 6 with the fastening member 15, and (b) shows status after fastening the first cylinder 8 and the main bearing 6 with the fastening member 15);
Fig. 5 shows the first embodiment, and shows an example of the fastening member 15 when used as a nut ((a) shows status before fastening the fastening member 15 and a bolt 16, and (b) shows status after fastening the fastening member 15 and the bolt 16);
Fig. 6 shows the first embodiment, and shows a procedure to assemble the compression mechanism part 3 with center adjusting ((a) shows status in which the first cylinder 8 and the main bearing 6, and the second cylinder 9 and the auxiliary bearing 7 are fastened with the fastening member 15 (center adjusting fastening (1)), (b) shows the compression mechanism part 3 in which the bolt 16 is fastened to the fastening member 15 (center adjusting fastening (2));
Fig. 7 shows the first embodiment, and shows transition of axial forces of the fastening member 15 and the bolt 16 in cases of the center adjusting fastening (1) and the center adjusting fastening (2); and
Fig. 8 shows the first embodiment, and shows elastic deformation of the first cylinder 8 after the center adjusting fastening ((a) shows the elastic deformation after the center adjusting fastening (1), and (b) shows the elastic deformation after the center adjusting fastening (2)).

### DESCRIPTION OF THE PREFERRED EMBODIMENTS

### Embodiment 1.

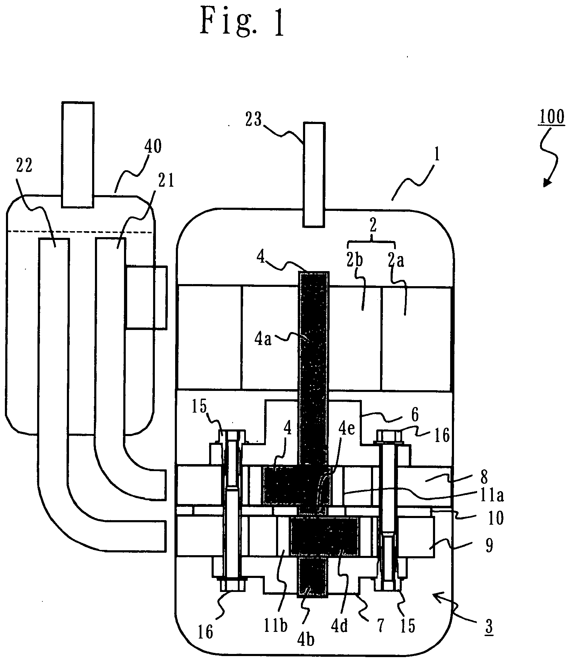

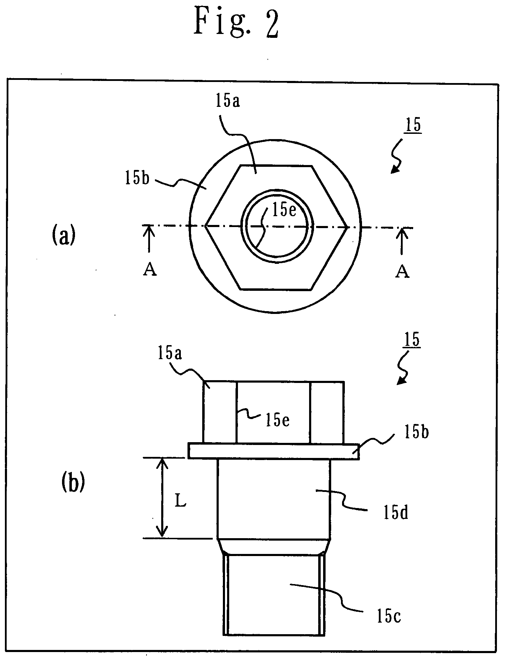

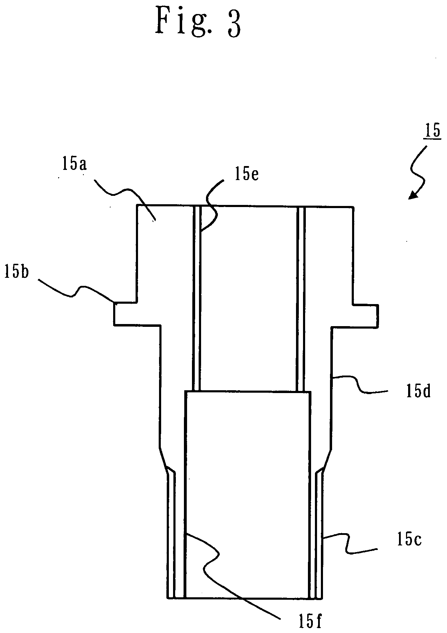

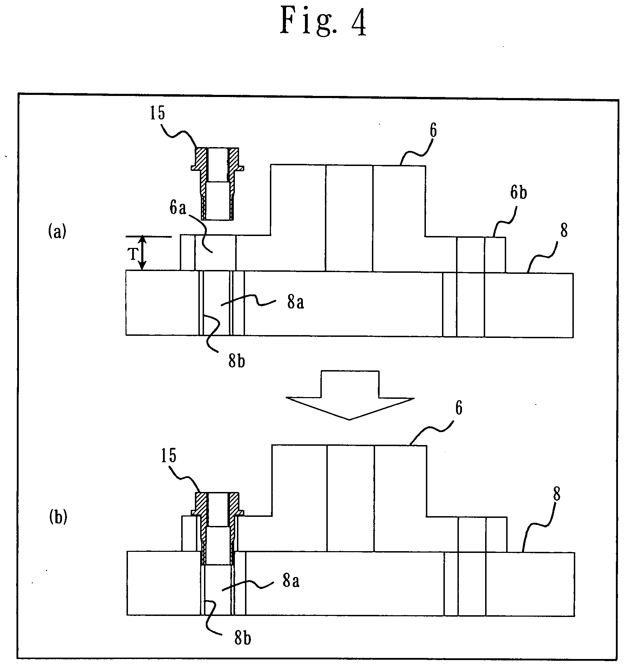

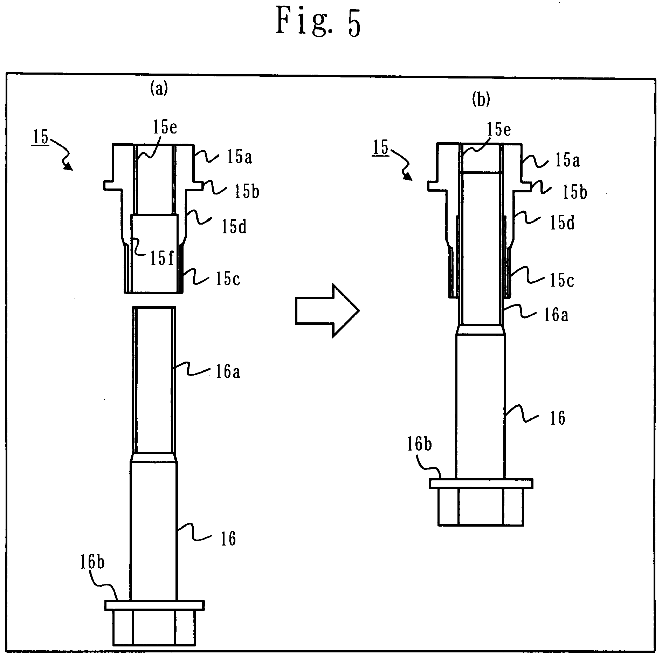

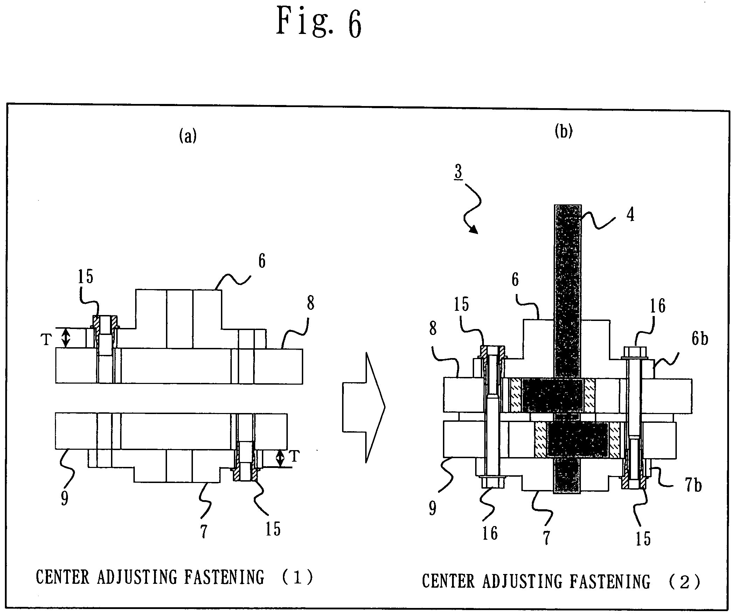

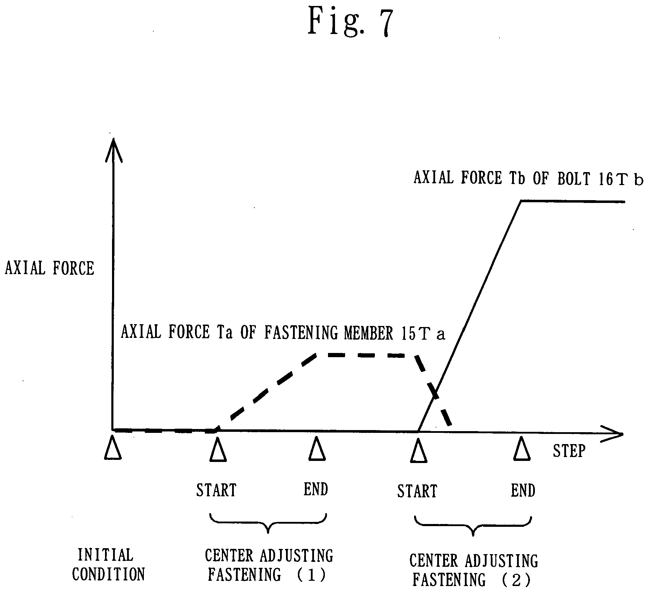

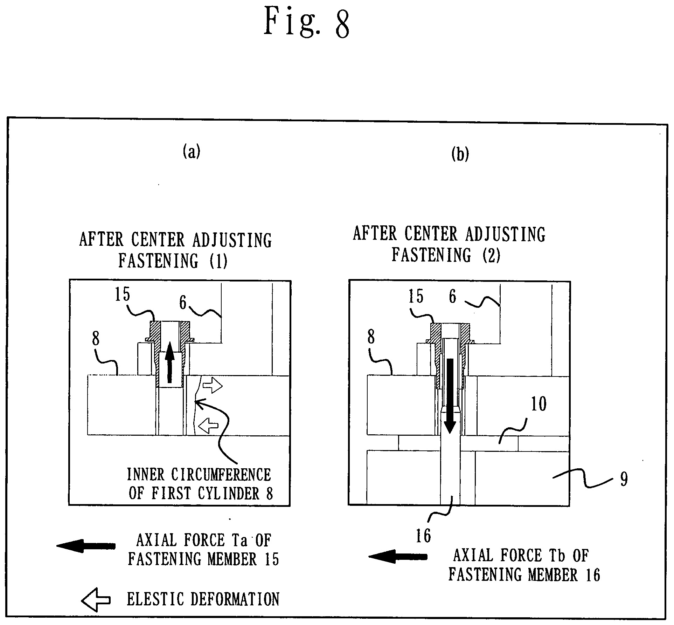

Figs. 1 through 8 show the first embodiment; Fig. 1 is a longitudinal sectional view of a motor 2-cylinder rotary compressor 100; Fig. 2 illustrates a fastening member 15 ((a) is a plan view, and (b) is a front view); Fig. 3 is a A-A cross sectional view of (a) of Fig. 2; Fig. 4 shows one example of the fastening member 15 when used as a bolt ((a) shows status before fastening a first cylinder 8 and a main bearing 6 with the fastening member 15, and (b) shows status after fastening the first cylinder 8 and the main bearing 6 with the fastening member 15); Fig. 5 shows one example of the fastening member 15 when used as a nut ((a) shows status before fastening the fastening member 15 and a bolt 16, and (b) shows status after fastening the fastening member 15 and the bolt 16); Fig. 6 shows a procedure to assemble the compression mechanism part 3 with center adjusting ((a) shows status in which the first cylinder 8 and the main bearing 6, and the second cylinder 9 and the auxiliary bearing 7 are fastened with the fastening member 15 (center adjusting fastening (1)), (b) shows the compression mechanism part 3 in which the bolt 16 is fastened to the fastening member 15 (center adjusting fastening (2)); Fig. 7 shows transition of axial forces of the fastening member 15 and the bolt 16 in cases of the center adjusting fastening (1) and the center adjusting fastening (2); and Fig. 8 shows elastic deformation of the first cylinder 8 after the center adjusting fastening ((a) shows the elastic deformation after the center adjusting fastening (1), and (b) shows the elastic deformation after the center adjusting fastening (2)).

The present embodiment will be explained using a motor 2-cylinder rotary compressor 100; however, the present embodiment is not limited to the 2-cylinder type, but can be applied to any kinds of rotary compressor such as a swing rotary compressor, etc.

The feature of the present embodiment is a fastening member 15 for fastening a bearing (a main bearing 6, an auxiliary bearing 7) that forms a compression mechanism part 3 of the 2-cylinder rotary compressor 100 and a cylinder (the first cylinder 8, the second cylinder 9).

The fastening member 15 of the present embodiment includes a function as a bolt and also a function as a nut.

Therefore, it is possible to assemble with center adjusting; in addition, a component for center adjusting assembly can be effectively used for fastening, and further a distortion of an inner circumference of the cylinder can be prevented.

Before explaining the fastening member 15, a structure of the 2-cylinder rotary compressor 100 will be explained first. However, known components are used other than the fastening member 15, and their detailed explanation will be omitted.

With reference to Fig. 1, the structure of the 2-cylinder rotary compressor 100 will be explained. The 2-cylinder rotary compressor 100 contains a motor 2 including a stator 2a and a rotor 2b and a compression mechanism part 3 driven by the motor 2 in a hermetic container 1 with high-pressure ambience.

The rotational force of the motor 2 is transmitted to the compression mechanism part 3 via a crank shaft 4.

The crank shaft 4 includes a main shaft 4a fixed to the rotor 2b of the motor 2, an auxiliary shaft 4b provided on the opposite side of the main shaft 4a, a main shaft side eccentric part 4c and an auxiliary shaft side eccentric part 4d to be formed with a predetermined phase difference (180 degrees, for example) with the main shaft 4a and the auxiliary shaft 4b, and an intermediate shaft 4e provided between the main shaft side eccentric part 4c and the auxiliary shaft side eccentric part 4d.

The main bearing 6 is fitted to the main shaft 4a of the crank shaft 4 with a clearance for sliding, and supports the main shaft 4a rotatably.

Further, an auxiliary bearing 7 is fitted to the auxiliary shaft 4b of the crank shaft 4 with a clearance for sliding, and supports the auxiliary shaft 4b rotatably.

The compression mechanism part 3 includes the first cylinder 8 at the main shaft 4a side and the second cylinder 9 at the auxiliary shaft 4b side.

The first cylinder 8 has a circular internal space, inside of which a first piston 11a is provided to be fitted rotatably to the main shaft side eccentric part 4c of the crank shaft 4. Further, the first vane (not illustrated) reciprocating according to the rotation of the main shaft side eccentric part 4c is provided.

Both ends in the axial direction of the internal space of the first cylinder 8 in which the first piston 11a fitted rotatably to the main shaft side eccentric part 4c of the crank shaft 4 and the first vane are closed by the main bearing 6 and a partition plate 10, thereby forming a compression room.

The first cylinder 8 is fixed to an inner circumference of the hermetic container 1.

The second cylinder 9 also includes a circular internal space, inside of which a second piston 11b is provided to be fitted rotatably to the auxiliary shaft side eccentric part 4d of the crank shaft 4. Further, the second vane (not illustrated) reciprocating according to the rotation of the auxiliary shaft side eccentric part 4d is provided. The first piston 11a and the second piston 11b are defined as simply "pistons".

Both ends in the axial direction of the internal space of the second cylinder 9 in which the second piston 11b fitted rotatably to the auxiliary shaft side eccentric part 4d of the crank shaft 4 and the second vane are closed by the auxiliary bearing 7 and the partition plate 10, thereby forming a compression room.

The first cylinder 8 and the main bearing 6 are fastened with the fastening member 15 which is the feature of the present embodiment. Plural fastening members 15 can be used; here, the first cylinder 8 and the main bearing 6 are fastened with three fastening members 15. A structure of the fastening member 15 will be discussed later.

At an end of the first cylinder 8 at the main bearing 6 side in the axial direction, internal threads, the number of which is at least the number of the fastening members 15, are formed. Then, an external thread 15c of the fastening member 15 is fastened to the internal thread of the first cylinder 8 (Fig. 2, Fig. 3), thereby assembling the main bearing 6 and the first cylinder 8 with center adjusting.

Further, similarly to the above, the second cylinder 9 and the auxiliary bearing 7 are fastened with the fastening member 15 which is the feature of the present embodiment. Plural fastening members 15 can be used; here, the second cylinder 9 and the auxiliary bearing 7 are fastened with three fastening members 15.

At an end of the second cylinder 9 at the auxiliary bearing 7 side in the axial direction, internal threads, the number of which is at least the number of the fastening members 15, are formed. Then, the external thread 15c of the fastening member 15 is fastened to the internal thread of the second cylinder 9 (Fig. 2, Fig. 3), thereby assembling the second cylinder 9 and the auxiliary bearing 7 with center adjusting.

A set of the first cylinder 8 and the main bearing 6 fastened with a bolt using the fastening member 15 and a set of the second cylinder 9 and the auxiliary bearing 7 fastened with a bolt using the fastening member 15 are fastened with a bolt 16 (fastening bolt), inserting the partition plate 10 between the sets, and fixed.

At this time, the bolt 16 inserted to the second cylinder 9, the partition plate 10, and the first cylinder 8 from the auxiliary bearing 7 side is fastened to the internal thread of the fastening member 15 for fastening the first cylinder 8 and the main bearing 6. This fact will be discussed later including the operation and effect.

Further, the bolt 16 inserted to the first cylinder 8, the partition plate 10, and the second cylinder 9 from the main bearing 6 side is fastened to the internal thread of the fastening member 15 for fastening the first cylinder 8 and the main bearing 6. A set of the second cylinder 9 and the auxiliary bearing 7 fastened with a bolt using the fastening member 15 and a set of the second cylinder 9 and the auxiliary bearing 7 tightened with a bolt using the fastening member 15 are fastened with the bolt 16, inserting the partition plate 10 between the sets, and fixed.

At this time, the bolt 16 inserted to the second cylinder 9, the partition plate 10, and the first cylinder 8 from the auxiliary bearing 7 side is fastened to the internal thread of the fastening member 15 for fastening the second cylinder 9 and the auxiliary bearing 7.

An accumulator 40 is provided next to the hermetic container 1. A suction connecting tube 21 and a suction connecting tube 22 couple the first cylinder 8 and the second cylinder 9 with the accumulator 40, respectively.

Refrigerant gas compressed by the first cylinder 8 and the second cylinder 9 is discharged to the inside of the hermetic container 1, passes through the motor 2, and transmitted to a refrigerating cycle of a refrigerating air conditioner device from a discharge tube 23.

Further, electric power is supplied to the motor 2 from a glass terminal (not illustrated) via a lead wire (not illustrated).

At the bottom of the inside of the hermetic container 1, lubricating oil (refrigerating machine oil) for lubricating each sliding part of the compression mechanism part 3 is reserved, though it is not illustrated.

The lubricating oil is supplied to each sliding part of the compression mechanism part 3 from an oil supply hole (not illustrated) provided at the crank shaft 4, by raising the lubricating oil reserved at the bottom of the hermetic container 1 along an inner circumference of the crank shaft 4 (not illustrated) by centrifugal force due to the rotation of the crank shaft 4. From each oil supply hole, the lubricating oil is supplied to a sliding part each of between the main shaft 4a and the main bearing 6, the main shaft side eccentric part 4c and the first piston 11a, and the auxiliary shaft side eccentric part 4d and the second piston 11b, and the auxiliary shaft 4b and the auxiliary bearing 7.

Next, the structure of the fastening member 15 will be explained with reference to Figs. 2 and 3. The fastening member 15 includes at least following elements as shown in Figs. 2 and 3.
(1) a head 15a (a hexagonal shape, for example) to transmit rotational force of a fastening tool;
(2) a seating face 15b (a flange, a brim) located next to the head 15a and contacting a partner member upon fastening;
(3) a neck 15d provided in a standing condition from the seating face 15b at the opposite side to the head 15a (assuming that the length of the neck 15d in the axial direction is L);
(4) an external thread 15c having a smaller diameter than the neck 15d and connected to the neck 15d;
(5) an internal thread 15e drilled on the same axis with the external thread 15c at an inner circumference of the head 15a or an inner circumference of the head 15a and at least a part of the neck 15d;

It is preferable to drill the internal thread 15e at the inner circumferences of the head 15a and a part of the neck 15d to at the inner circumference of the head 15a. This is because the axial force worked on the external thread 15c can be released by the final assembling status of the fastening structure.

However, it is also possible to provide the internal thread 15e at the inner circumference of the head 15a. This is because, at this time, even if the axial force worked on the external thread 15c cannot be released at the final assembling status of the fastening structure, the distortion of the cylinder can be suppressed by reducing the fastening torque (axial force) of the fastening member 15. (6) an inner circumference escape part 15f having a larger diameter than the internal thread 15e and drilled on the same axis with the external thread 15c at the inner circumference of at least a part of the neck 15d and the external thread 15c.

At the final assembled status of the fastening structure, since the axial force of the bolt to be fastened with the internal thread 15e is large, it is preferable to fasten at around the head 15a which has enough thickness and strength with the bolt. Therefore, the inner circumference escape part 15f is necessary.

The fastening member 15 as structured above includes a function as a bolt and also a function as a nut. Therefore, although the fastening member 15 functions as a nut at the final assembled status of the fastening structure, it is also possible to make the fastening member 15 function as a bolt at the sub assembled status, and thus plural members can be effectively fastened.

With reference to Fig. 4, an example in which the fastening member 15 is used as a bolt will be explained. In the example shown in Fig. 4, the main bearing 6 and the first cylinder 8 of the 2-cylinder rotary compressor 100 shown in Fig. 1 are fastened by the fastening member 15. The fastening member 15 is fastened to an internal thread 8b of a screw hole 8a of the first cylinder 8 via a mounting hole 6a of the main bearing 6.

At this time, a gap having a predetermined dimension is provided between the neck 15d of the fastening member 15 and the mounting hole 6a of the main bearing 6. The gap having the predetermined dimension is a gap which enables to assemble the main bearing 6 and the first cylinder 8 with center adjusting, etc.

Further, the axial force fastening the main bearing 6 and the first cylinder 8 is preferably weak so as not to generate distortion at the first cylinder 8; however, it is necessary to have at least strength sufficient to prevent breaking-down of the center adjusting of the main bearing 6 and the first cylinder 8 caused by the force (impact, etc.) added at the time of carrying in the manufacturing process.

When the axial force of the fastening member 15 for fastening the main bearing 6 and the first cylinder 8 is increased, it is preferable to drill the internal thread 15e of the fastening member 15 at the inner circumference of the head 15a and a part of the neck 15d. The internal thread 15e drilled at the inner circumference of the head 15a and a part of the neck 15d is the internal thread 15e drilled continuously at the inner circumference of almost the whole of the head 15a and a part of the neck 15d.

This is because the axial force worked on the external thread 15c can be released by the final assembled status of the fastening structure.

Further, when the axial force of the fastening member 15 for fastening the main bearing 6 and the first cylinder 8 is increased, it is preferable to provide an inner circumference escape part 15f having a larger diameter than the internal thread 15e by drilling on the same axis with the external thread 15c at the inner circumference of a part of the neck 15d and the external thread 15c. This is because at the final assembled status of the fastening structure, the bolt can be fastened to the internal thread 15e located around the head 15a which has enough thickness and strength.

With reference to Fig. 5, an example in which the fastening member 15 is used as a nut will be explained. Fig. 5 omits a member to be fastened; the internal thread 15e of the fastening member 15 is fastened to the external thread 16a of the bolt 16.

With reference to Figs. 6 through 8, assembling of the compression mechanism part 3 (assembling with center adjusting) will be explained.

However, the following assembling procedure is one of examples, and the assembling is not limited to the following.

First, the first cylinder 8 and the main bearing 6 are fastened with the fastening member 15 (used as a bolt) and fixed. The fastening member 15 is fastened to the internal thread 8b of the screw hole 8a of the first cylinder 8 via the mounting hole 6a of a flange 6b (thickness: T) of the main bearing 6 (Fig. 4). Plural pieces (three, in this example) of the fastening member 15 are used.

Similarly, the second cylinder 9 and the auxiliary bearing 7 are fastened with the fastening member 15 (used as a bolt). Plural pieces (three, in this example) of the fastening member 15 are used.

The first piston 11a and the first vane (not illustrated) are set to the first cylinder 8. At this time, the first cylinder 8 is placed at the upper side, and the main bearing 6 is at the lower side.

The main shaft 4a of the crank shaft 4 is inserted to a set of the first cylinder 8 and the main bearing 6 fastened with the fastening member 15 from the first cylinder 8 side. That is, the crank shaft 4 is inserted above the first cylinder 8.

The partition plate 10 is set to the intermediate shaft 4e by passing under the auxiliary shaft 4b and the auxiliary shaft side eccentric part 4d of the crank shaft 4.

The second piston 11b is inserted to the auxiliary shaft side eccentric part 4d of the crank shaft 4 from the auxiliary shaft 4b side.

The second vane (not illustrated) is set to the second cylinder 9.

A set of the second cylinder 9 and the auxiliary bearing 7 fastened with the fastening member 15 with the second vane is inserted from the auxiliary shaft 4b side of the crank shaft 4, with pressing the second vane so as not to fall apart.

Next, with maintaining a posture in which the main shaft 4a of the crank shaft 4 is at the lower side and the auxiliary shaft 4b is at the upper side, with rotating the crank shaft 4, the bolts 16 (three) are fastened to the matching internal threads 15e of the fastening member 15 from the auxiliary bearing 7 side. At this time, the fastening member 15 is fixed by the fastening tool. The fastening member 15 functions as a nut.

Finally, the bolts 16 (three) are fastened to the matching internal thread 15e of the fastening member 15 from the main bearing 6 side.

The first cylinder 8 and the main bearing 6 are fastened with the fastening member 15 and fixed, and the second cylinder 9 and the auxiliary bearing 7 are fastened with the fastening member 15 and fixed, thereby fastening with center adjusting (1). Centering of the first cylinder 8 and the main bearing 6, and the second cylinder 9 and the auxiliary bearing 7 are done.

The center adjusting fastening (1) (tentative fastening) is tentative fastening at the sub assembled status. Accordingly, the axial force Ta of the fastening member 15 at this time can be set to the minimum necessary axial force Ta. The minimum necessary axial force Ta is the axial force sufficient to prevent breaking-down of the center adjusting of the main bearing 6 and the first cylinder 8 caused by the force (impact, etc.) added at the time of carrying in the manufacturing process.

Even if the axial force Ta of the fastening member 15 is reduced to the minimum necessary value, an elastic deformation occurs at the first cylinder 8 and the second cylinder 9 to cause distortion in the first cylinder 8 and the second cylinder 9. For example, as shown in (a) in Fig. 8, in the first cylinder 8, due to the axial force Ta of the fastening member 15, an elastic deformation occurs at the portion to be fastened to the external thread 15c of the fastening member 15 in the direction so as to reduce the inner diameter. Further, another elastic deformation occurs at the portion of the first cylinder 8 at the partition plate 10 side in the direction so as to increase the inner diameter. These elastic deformations cause distortion of the first cylinder 8. The same can be said in case of the second cylinder 9.

At the center adjusting fastening (2) (final fastening), with rotating the crank shaft 4, the bolts 16 (three) are fastened to the matching internal threads 15e of the fastening member 15 from the auxiliary bearing 7 side, and thereby the center adjusting fastening of a set of the second cylinder 9 and the auxiliary bearing 7 fastened with the fastening member 15 and a set of the first cylinder 8 and the main bearing 6 fastened with the fastening member 15 are respectively done. At this time, the fastening member 15 functions as a nut.

Further, the axial force Tb of the bolt 16 to be fastened to the internal thread 15e of the fastening member 15 is made larger than the axial force Ta of the fastening member 15, since it is the final assembling (Fig. 7).

The axial force Tb of the bolt 16 is directed to the opposite side of the axial force Ta of the fastening member 15 as shown in Fig. 8, so that if the center adjusting fastening (2) starts and the axial force Tb of the bolt 16 is added to the internal thread 15e of the fastening member 15, the axial force Ta of the fastening member 15 is reduced. Then, before finishing the center adjusting fastening (2), the axial force Ta of the fastening member 15 is released.

As a detailed explanation, at the center adjusting step (1), the axial force Ta is generated by elastically extending the neck 15d and the external thread 15c of the fastening member 15. Accordingly, the flange 6b of the main bearing 6 located between the fastening member 15 and the first cylinder 8 is balanced in a form whose size is elastically reduced from the initial dimension due to the work of the axial force Ta of the fastening member 15.

At the center adjusting step (2), the axial force Tb of the bolt 16 is added, the size of the flange 6b of the main bearing 6 is further elastically reduced. In accordance with that, the sizes of the neck 15d and the external thread 15c of the fastening member 15 are also elastically reduced, and finally returned to the initial dimension, thereby releasing the axial force Ta of the fastening member 15.

In order to obtain the above effect more clearly, it is possible to fasten via a spring washer between the seating face 15b of the fastening member 15 and the flange 6b of the main bearing 6. If the axial force Ta of the fastening member 15 can be maintained within a range of deformation of the spring washer, it is possible to release the axial force Ta of the fastening member 15 by the similar mechanism as discussed even if the flange 6b of the main bearing 6 has a higher strength.

Further, if the elastic deformation of the fastening member 15 is used, it is possible to release the axial force Ta of the fastening member 15 without adding the spring washer even if the flange 6b of the main bearing 6 has a higher strength.

As discussed above, in the fastening member 15, the axial force Ta of the fastening member 15 is generated by elastically extending the neck 15d and the external thread 15c from the initial dimension by fastening at the center adjusting step (1). The axial force Tb of the bolt 16 at the center adjusting step (2) adds a load to extend downwardly in the figure ((b) in Fig. 8) to the internal thread 15e. Since the internal thread 15e is formed over the neck 15d, a downward load is added to the inner circumference side of the neck 15d by the bolt 16, and the neck 15d is further deformed so as to extend downwardly. This extension reduces the force of the external thread 15c of the fastening member 15 acted on the first cylinder 8, and finally the axial force Ta of the fastening member 15 can be eliminated.

After releasing the axial force Ta of the fastening member 15, the axial force Tb of the bolt 16 worked on the internal thread 15e of the fastening member 15 works on the seating face 15b of the fastening member 15. Then, the seating face 15b of the fastening member 15 and the seating face 6b of the bolt 16 (Fig. 5) compress the flange 6b of the main bearing 6, the first cylinder 8, the partition plate 10, the second cylinder 9, and a flange 7b of the auxiliary bearing 7. At this time, although the first cylinder 8 is compressed from both upside and downside by the flange 6b of the main bearing 6 and the partition plate 10, since the contacting area is large, there hardly occurs local distortion or deformation. Similarly, although the second cylinder 9 is also compressed by the partition plate 10 and the flange 7b of the auxiliary bearing 7, there hardly occurs local distortion or deformation by the same reason.

At the final stage of the center adjusting fastening (2), the bolts 16 (three) are fastened to the matching internal threads 15e of the fastening member 15 from the main bearing 6 side, thereby releasing the axial force Ta of the fastening member 15 in the second cylinder 9 similarly to the first cylinder 8.

As has been discussed, it is possible to assemble the main bearing 6 with center adjusting by the bolt function of the fastening member 15, and also by the nut function of the fastening member 15, to assemble the auxiliary bearing 7 with center adjusting.

Further, for the center adjusting of the main bearing 6, the axial force can be set to the minimum necessary force (the axial force Ta of the fastening member 15), and thereby the deformation of the first cylinder 8 can be suppressed within the elastic region, and thus at the final assembled status, the axial force Ta of the fastening member 15 worked on the internal thread of the first cylinder 8 can be released. Therefore, the deformation of the inner circumference of the first cylinder 8 is not remained.

As discussed, since at the final assembled status the axial force Ta of the fastening member 15 does not remain at the internal thread of the first cylinder 8, a distortion is not generated at the inner circumference of the first cylinder 8, and internal leakage during the compression can be prevented. Therefore, it is possible to obtain the 2-cylinder rotary compressor with high performance.

Further, the assembling can be done with center adjusting, so that it is possible to obtain the 2-cylinder rotary compressor with high bearing function and high reliability.

Here, in case of a 1-cylinder rotary compressor, the fastening member 15 is used for fastening a main bearing and a cylinder (center adjusting fastening (1)).

Further, the bolt 16 is used for fastening an auxiliary bearing and the cylinder (center adjusting fastening (2)).

The fastening member related to the present invention is structured as above, thereby including both functions as a bolt and a nut.

Having thus described several particular embodiments of the present invention, various alterations, modifications, and improvements will readily occur to those skilled in the art.

## Claims

1. A rotary compressor (100) containing a compression mechanism part (3) for compressing refrigerant and a motor (2) for driving the compression mechanism part (3) via a crank shaft (4) in a hermetic container (1),
wherein the compression mechanism part (3) includes:
two bearings (6, 7) supporting the crank shaft (4) rotatably;
at least one cylinder (8) arranged between the two bearings (6, 7) and
compressing the refrigerant by a piston (11a) fitted rotatably to the crank shaft (4); and
a fastening member (15) and a fastening bolt (16) fastening the two bearings (6, 7) and the at least one cylinder (8),
wherein one (6) of the two bearings is provided with a mounting hole (6a) which penetrates in an axial direction;
wherein the other (7) of the two bearings is provided with a hole which penetrates in the axial direction;
wherein the at least one cylinder (8) is provided with a screw hole (8a) which penetrates in the axial direction,
wherein the fastening member (15) includes:
(1) a head (15a) to transmit rotational force of a fastening tool;
(2) a seating face (15b) having a larger diameter than the mounting hole (6a) and from which the head (15a) is provided in a standing position;
(3) a neck (15d) having a smaller diameter than the mounting hole (6a), provided in a standing position from the seating face (15b) at an opposite side to the head (15a), and inserted in the mounting hole (6a);
(4) an external thread (15c) having a smaller diameter than the neck (15d), connected to the neck (15d), and screwed in the screw hole (8a);
(5) an internal thread (15e) drilled on a same axis with the external thread (15c) at a part including at least the head (15a) at an inner side of the head (15a) and the neck (15d); and
(6) an inner circumference escape part (15f) having a larger diameter than the internal thread (15e) and drilled on the same axis with the external thread (15c) at a part including at least a part of the neck (15d) and the external thread (15c) at the inner side of the neck (15d) and the external thread (15c), and
wherein the fastening bolt (16) is screwed in the internal thread (15e) of the fastening member (15) through the hole provided at the other (7) of the two bearings, the screw hole (8a), and the inner circumference escape part (15f) of the fastening member (15).

2. The rotary compressor of claim 1, wherein an axial force generated by the external thread of the fastening member is smaller than an axial force of the fastening bolt.

## Patentansprüche

1. Rotationsverdichter (100), umfassend einen Verdichtungsmechanismusabschnitt (3) zum Verdichten eines Kältemittels und einen Motor (2) zum Antreiben des Verdichtungsmechanismusabschnitts (3) über eine Kurbelwelle (4) in einem hermetisch verschlossenen Behälter (1),
wobei der Verdichtungsmechanismusabschnitt (3) umfasst:
zwei Lager (6, 7), welche die Kurbelwelle (4) drehbar lagern;
zumindest einen Zylinder (8), welcher zwischen den zwei Lagern (6, 7) angeordnet ist und das Kältemittel mittels eines Kolbens (11a), welcher drehbar an der Kurbellwelle (4) angebracht ist, verdichtet; und
ein Befestigungselement (15) und einen Befestigungsbolzen (16), die die zwei Lager (6, 7) und den zumindest einen Zylinder (8) befestigen,
wobei eines (6) der zwei Lager mit einer Montageöffnung (6a) versehen ist, welche in einer axialen Richtung hindurchgeht;
wobei das andere (7) der zwei Lager mit einer Öffnung versehen ist, welche in einer axialen Richtung hindurchgeht;
wobei der zumindest eine Zylinder (8) mit einem Schraubenloch (8a) versehen ist, welches in einer axialen Richtung hindurchgeht,
wobei das Befestigungselement (15) umfasst:
(1) einen Kopf (15a), um eine Rotationskraft eines Befestigungswerkzeugs zu übertragen;
(2) eine Anlagefläche (15b), welche einen größeren Durchmesser aufweist als die Montageöffnung (6a), und an welcher der Kopf (15a) in einer stehenden Position bereitgestellt ist;
(3) einen Hals (15d), welcher einen kleineren Durchmesser aufweist als die Montageöffnung (6a) und in einer stehenden Position an der Anlagefläche (15b) auf einer gegenüberliegenden Seite zum Kopf (15a) bereitgestellt ist, und in die Montageöffnung (6a) eingesetzt ist;
(4) ein Außengewinde (15c), welches einen kleineren Durchmesser aufweist als der Hals (15d), mit dem Hals (15d) verbunden ist und in das Schraubenloch (8a) eingeschraubt ist;
(5) ein Innengewinde (15e), welches auf einer gleichen Achse mit dem Außengewinde (15c) an einem Abschnitt eingebohrt ist, welcher zumindest den Kopf (15a) an einer Innenseite des Kopfes (15a) und den Hals (15d) umfasst; und
(6) einen Innenumfang-Ausweichabschnitt (15f), welcher einen größeren Durchmesser aufweist als das Innengewinde (15e) und auf der gleichen Achse mit dem Außengewinde (15e) an einem Abschnitt eingebohrt ist, welcher zumindest einen Teil des Halses (15d) und des Außengewindes (15c) an der Innenseite des Halses (15d) und das Außengewinde (15c) enthält, und
wobei der Befestigungsbolzen (16) in das Innengewinde (15e) des Befestigungselements (15) durch die Öffnung, welche an dem anderen (7) der zwei Lager vorgesehen ist, das Schraubenloch (8a) und den Innenumfang-Ausweichabschnitt (15f) des Befestigungselements (15) eingeschraubt ist.

2. Rotationsverdichter nach Anspruch 1,
wobei eine Axialkraft, welche durch das Außengewinde des Befestigungselements erzeugt wird, kleiner ist als eine Axialkraft des Befestigungsbolzens.

## Revendications

1. Compresseur rotatif (100) contenant une partie mécanisme de compression (3) destinée à comprimer un fluide frigorigène, et un moteur (2) destiné à entraîner la partie mécanisme de compression (3) par l'intermédiaire d'un arbre à manivelle (4) dans un contenant hermétique (1) ;
dans lequel la partie mécanisme de compression (3) comprend :
deux roulements (6, 7) qui supportent en rotation l'arbre à manivelle (4) ;
au moins un cylindre (8) agencé entre les deux roulements (6, 7) et qui comprime le fluide frigorigène par l'intermédiaire d'un piston (11a) ajusté de manière rotative sur l'arbre à manivelle (4) ; et
un élément de fixation (15) et un boulon de fixation (16) qui fixent les deux roulements (6, 7) et le ou les cylindres (8) ;
dans lequel l'un (6) des deux roulements est doté d'un trou de montage (6a) qui pénètre dans une direction axiale ;
dans lequel l'autre (7) des deux roulements est doté d'un trou qui pénètre dans la direction axiale ;
dans lequel le ou les cylindres (8) sont dotés d'un trou de vis (8a) qui pénètre dans la direction axiale ;
dans lequel l'élément de fixation (15) comprend :
1) une tête (15a) destinée à transmettre une force de rotation à un outil de fixation ;
2) une face de siège (15b) qui présente un diamètre supérieur à celui du trou de montage (6a) et à partir d'où la tête (15a) est prévue dans une position droite ;
3) un collet (15d) qui présente un diamètre inférieur à celui du trou de montage (6a), prévu dans une position droite à partir de la face de siège (15b) au niveau d'un côté opposé à la tête (15a), et inséré dans le trou de montage (6a) ;
4) un filet extérieur (15c) qui présente un diamètre inférieur à celui du collet (15d), connecté au collet (15d), et vissé dans le trou de vis (8a) ;
5) un filet intérieur (15e) foré sur le même axe que celui du filet extérieur (15c) au niveau d'une partie qui comprend au moins la tête (15a) au niveau d'un côté intérieur de la tête (15a), et le collet (15d) ; et
6) une partie dégagement de circonférence intérieure (15f) qui présente un diamètre supérieur à celui filet intérieur (15e), et forée sur le même axe que celui du filet extérieur (15c) au niveau d'une partie qui comprend au moins une partie du collet (15d), et le filet extérieur (15c) au niveau du côté intérieur du collet (15d), et le filet extérieur (15c) ; et
dans lequel le boulon de fixation (16) est vissé dans le filet intérieur (15e) de l'élément de fixation (15) à travers le trou prévu au niveau de l'autre (7) des deux roulements, le trou de vis (8a), et la partie dégagement de circonférence intérieure (15f) de l'élément de fixation (15).

2. Compresseur rotatif selon la revendication 1, dans lequel une force axiale générée par le filet extérieur de l'élément de fixation, est inférieure à une force axiale du boulon de fixation.
